# EUROPEAN PATENT APPLICATION

(11) **EP 2 437 471 A1**
(43) Date of publication of application: **04.04.2012**
(21) Application number: 10780171.4
(22) Date of filing: 01.03.2010
(51) Int. Cl.: H04M 1/02, G06F 1/16, G09F 9/00

(54) **PORTABLE TERMINAL DEVICE**

(30) Priority: 28.05.2009 JP 2009128467
(71) Applicant: Panasonic Corporation, Kadoma-shi Osaka 571-8501 (JP)
(72) Inventor: TOMIBAYASHI, Kensuke c/o Panasonic Corporation IPROC, Osaka-shi, Osaka 540-6207 (JP); KOBAYASHI, Tsukasa c/o Panasonic Corporation IPROC, Osaka-shi, Osaka 540-6207 (JP)
(74) Representative: Grünecker, Kinkeldey, Stockmair & Schwanhäusser
(86) International application number: PCT/JP2010/001386
(87) International publication number: WO 2010/137208

(57) **Abstract**

There is provided a portable terminal device in which a display can be easily held and fixed regardless of a size or mass of the display.

The portable terminal device includes: a sub-display 31; a sub-display holder 21 including a first arm including a first engaging piece and a first pin hole, and a second arm including a second engaging piece, a second pin hole, and a projection, and arranged at a position opposing the first arm; a first case 16 including a first engaging part and a second engaging part configured to temporarily fix the sub-display holder 21; and a second case 29 including positioning pins. In a state where the sub-display holder 21 is temporarily fixed to the first case, the positioning pins formed in the second case are inserted into the first pin hole and the second pin hole of the sub-display holder 21 thereby fixing the sub-display holder 21.

## Description

### Technical Field

The present invention relates to a portable terminal device such as a mobile phone, and more particularly to holding of a display and a structure for fitting a display holder which holds the display.

### Background Art

As a related-art display unit holding device in an electronic device such as a mobile phone, a plurality of engaging projections are provided on an opening edge at one side of a bottomed frame body, and pressing members are disposed on a frame edge of the bottomed frame body at the other side to oppose the frame edge of the one side for pressing a display unit which is contained inside the bottomed frame body, thereby holding and fix the display unit (see Patent Document 1, for example).

Moreover, as means for holding and fixing a sub-liquid crystal module in a related-art mobile electronic device, the sub-liquid crystal module is held by a frame part, engaging pieces extending in a direction perpendicular to the frame part are formed on distal ends of a pair of arms formed on the frame part in opposite directions to each other, and the engaging pieces engage engaging parts of a front case thereby fixing the frame part to the case (see Patent Document 2, for example).

### Related Art Documents

### Patent Documents

Patent Document 1: JP-A-2002-72912
Patent Document 2: JP-A-2007-124384

### Summary of the Invention

### Problem to be Solved by the Invention

However, in the related-art display unit holding device disclosed in Patent Document 1, there is no description as to how the display unit holding device itself is held in and fixed to the electronic device such as a mobile phone.

Further, in the means for holding and fixing the sub-display in the related-art mobile electronic device disclosed in Patent Document 2, since the engaging pieces formed at the distal ends of the arms of the frame part holding the sub-liquid crystal module engage the engaging parts of a main body, there has been a problem of difficulty of positional adjustment between the sub-liquid crystal module after the engagement and a display window in the case.

This invention has been made to solve the problems in the related art as described above, and an object thereof is to provide a portable terminal device in which a display can be reliably and easily held, and which is excellent in assembling workability in which the display holder can be fixed by inserting positioning pins formed in a second case into a pin holes of the display holder in a state where the display holder which holds the display is temporarily fixed at a predetermined position in a first case.

### Means for Solving the Problem

A portable terminal device according to the invention includes: a display; a display holder configured to fix the display and including a first arm including a first engaging piece and a first pin hole, and a second arm including a second engaging piece, a second pin hole, and a projection, and arranged at a position opposing the first arm; a first case including a first engaging part configured to engage the first engaging piece thereby temporarily fixing the display holder; and a second engaging part configured to engage the second engaging piece thereby temporarily fixing the display holder; and a second case having positioning pins, and the positioning pins formed in the second case are inserted into the first pin hole and the second pin hole of the display holder in a state where the display holder is temporarily fixed to the first case, whereby the display holder is fixed.

With this configuration, the display holder can be temporarily fixed to the first case, and the display holder can be sandwiched and fixed between the first case and the second case, by inserting the positioning pins formed in the second case into the pin holes of the display holder, in the temporarily fixed state. Moreover, rotation of the display holder can be prevented, because a projection is provided in the second arm, and therefore, assembling workability can be enhanced.

In the portable terminal device, the first engaging piece is provided in a direction curved in a clockwise direction or in a counterclockwise direction around a center of a frame shape of the display holder, with respect to an extending direction of the first arm, and a rotation preventing rib is provided adjacent to the second engaging piece of the second arm in the same direction as the direction of the first engaging piece which is curved around the center of the frame shape of the display holder, with respect to the extending direction of the first arm.

With this configuration, the rotation of the display holder during assembling work can be prevented, and therefore, the assembling workability can be enhanced.

In the portable terminal device, the display holder has a frame shape, and the portable terminal device includes an engaging projection arranged inside the frame shape and configured to sandwich and hold one side of the display, and a pressing part arranged inside the frame shape so as to oppose the engaging projection and configured to press an opposite side of the display.

With this configuration, it is possible to hold the display at a predetermined position in the display holder.

In the portable terminal device, the display includes a display body, a drive IC arranged in a substantially center part of an end part of one surface of the display body, and a flexible circuit board drawn from a corner part of the display body.

According to this structure, it is possible to hold the display at the predetermined position in the display holder, even though the drive IC is large-sized.

### Advantages of the Invention

In the portable terminal device according to the invention, the display can be reliably and easily held, and the portable terminal is excellent in the assembling workability since the display holder can be fixed by inserting the positioning pins formed in the second case into the pin holes of the display holder in a state where the display holder which holds the display is temporarily fixed to the predetermined position in the first case.

### Brief Description of the Drawings

Fig. 1(a) is a front view of a mobile phone of a foldable type in an embodiment according to the invention, and Fig.1(b) is a front view of the mobile phone in a state opened around a hinge part.
Fig. 2 is a view showing a state where a sub-display holder which holds a sub-display is temporarily fixed to a first case.
Fig. 3 is a view of a second case as seem from an inside.
Fig. 4 is a front view of the sub-display holder which holds the sub-display.
Fig. 5(a) is a sectional view as seen from a direction of arrow marks A-A in Fig. 2, Fig. 5(b) is a sectional view as seen from a direction of arrow marks B-B in Fig. 2, Fig.5(c) is a sectional view as seen from a direction of arrow marks C-C in Fig. 2, and Fig. 5(d) is a sectional view for explaining fitting between a second positioning pin and a second pin hole.
Fig. 6 is a front view of the sub-display holder.
Fig. 7(a) is a sectional view as seen from a direction of arrow marks E-E in Fig. 6, and Fig. 7(b) is a sectional view as seen from a direction of arrow marks D-D in Fig. 4.

### Mode for Carrying Out the invention

Now, a portable terminal device in an embodiment according to the invention will be described with reference to the drawings.

In this embodiment, description will be made with reference to a foldable mobile phone as the portable terminal device.

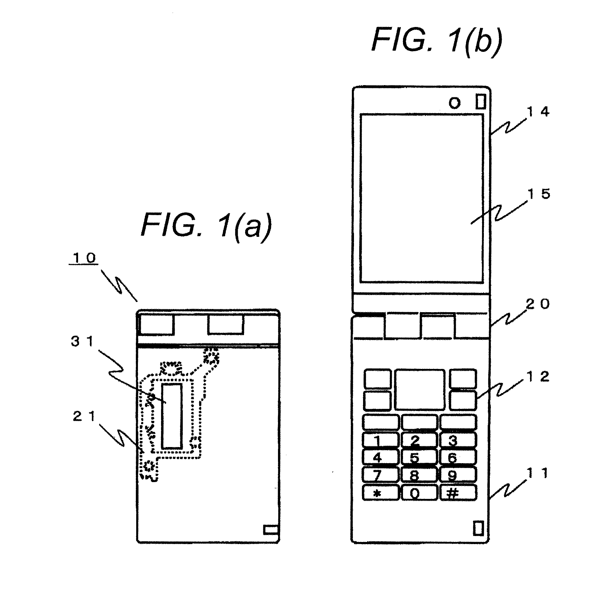

Fig. 1(a) is a front view of a mobile phone of a foldable type in an embodiment according to the invention, and Fig. 1(b) is a front view of the mobile phone in a state opened around a hinge part.

In Fig. 1, a mobile phone 10 of a foldable type in this embodiment includes a first case body 11 and a second case body 14 which are joined together so as to rotate around a hinge part 20.

An operating unit 12 having operating key buttons, a microphone (not shown), a control unit (not shown) for realizing various functions of the mobile phone, and so on are disposed on or incorporated in the first case body 11.

A main display 15, a sub-display 31, a circuit board (not shown) for controlling these displays are disposed on or incorporated in the second case body 14.

The second case body 14 is composed of a first case 16 and a second case 29 for covering the first case 16, which will be described below, and a sub-display holder 21 which holds the sub-display 31 is provided inside the second case body 14.

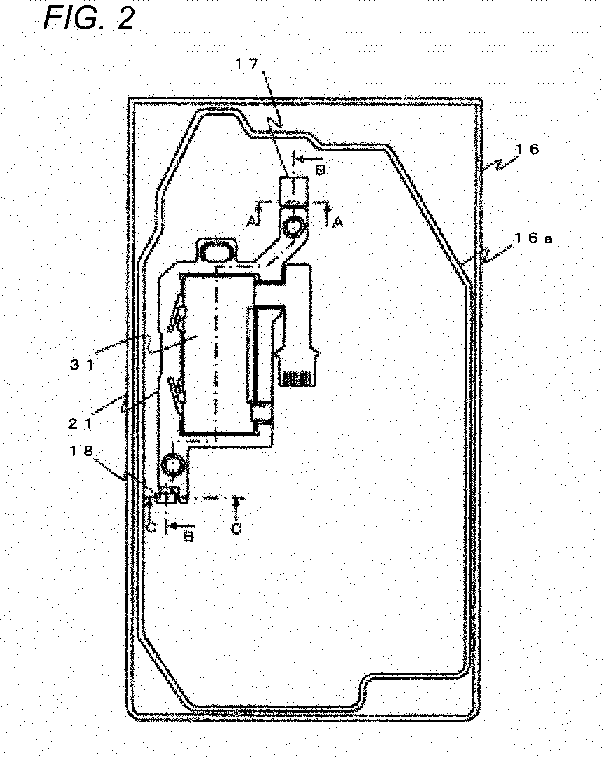

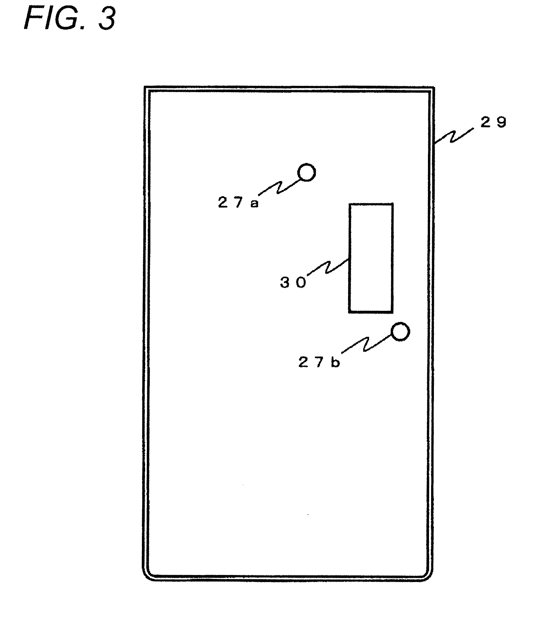

Fig. 2 is a view showing a state where the sub-display holder which holds the sub-display is temporarily fixed to the first case. Moreover, Fig. 3 is a view of the second case 29 as seen form an inside.

In Fig. 2, the first case 16 is formed of insulating resin into a box shape.

In Fig. 3, the second case 29 is provided with a first positioning pin 27a, a second positioning pin 27b, and a sub-display window 30.

A packing groove 16a in an annular shape into which a waterproof packing (not shown) molded of elastic material is fitted is provided inside the first case 16 substantially near an outer peripheral edge thereof. Because the first case 16 covers the second case 29 as shown in Fig. 3, and the waterproof packing is pressurized, a waterproof region is formed in a space where the sub-display holder 21 which holds the sub-display 31 is incorporated.

Moreover, a first engaging part 17 in a gate shape and a second engaging part 18 in a gate shape for temporarily holding the sub-display holder 21 are formed at respective opposite positions on a bottom surface of the waterproof region.

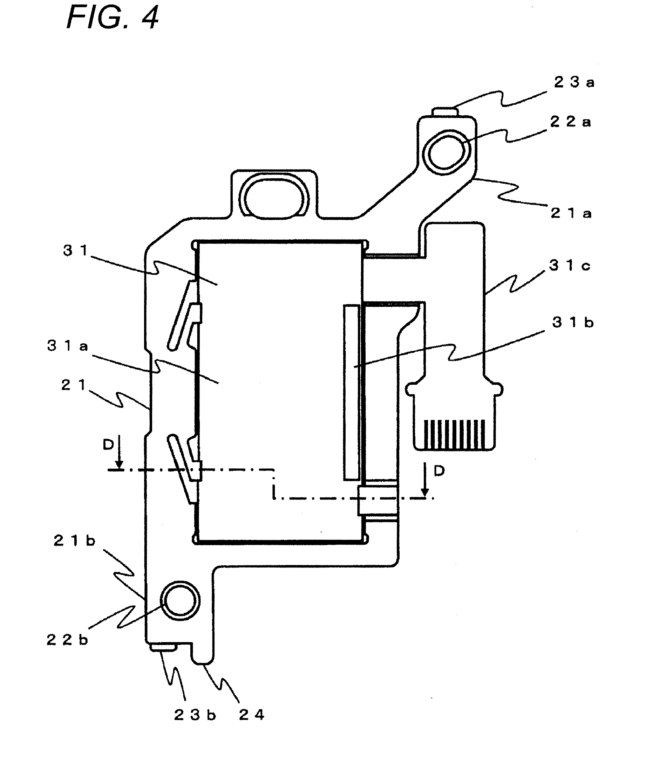

Fig. 4 is a front view of the sub-display holder in a state holding the sub-display.

In Fig. 4, the sub-display holder 21 is molded of resin having insulation characteristics and flexibility into a frame shape.

The sub-display 31 is held inside the sub-display holder 21.

The sub-display 31 is configured as a unit including a sub-display body 31 a in a rectangular shape which is composed of display elements formed of liquid crystal or organic electro luminescence, a drive IC 31 b which is disposed on one surface of the sub-display body 31 a near a center of an end part thereof, and a flexible circuit board 31 c which is drawn from a region near a corner part of the sub-display body 31 a.

A first arm 21 a and a second arm 21 b are formed at opposite positions outside the sub-display holder 21.

The first arm 21 a has a first pin bole 22a configured to be fitted with the first positioning pin 27a which is formed in the second case 29, and at a distal end thereof, a first engaging piece 23a configured to be loosely engage the first engaging part 17 in a gate shape which is formed in the first case.

The second arm 21 b has a second pin bole 22b configured to be fitted with the second positioning pin 27b which is formed in the second case 29, and at a distal end thereof, a second engaging piece 23b configured to loosely engage the second engaging part 18 in a gate shape which is formed in the first case.

Further, the second arm 21 b has a rotation preventing rib 24 which is a projection disposed, at a position adjacent to the second engaging piece 23b, so as to sandwich a leg portion of the second engaging part 18 in a gate shape which is formed in the second case 29. By providing this rotation preventing rib 24, it is possible to prevent the sub-display holder 21 from dropping from the first engaging part 17 and the second engaging part 18 due to rotation of the sub-display holder 21 during assembling work. Therefore, assembling workability can be enhanced.

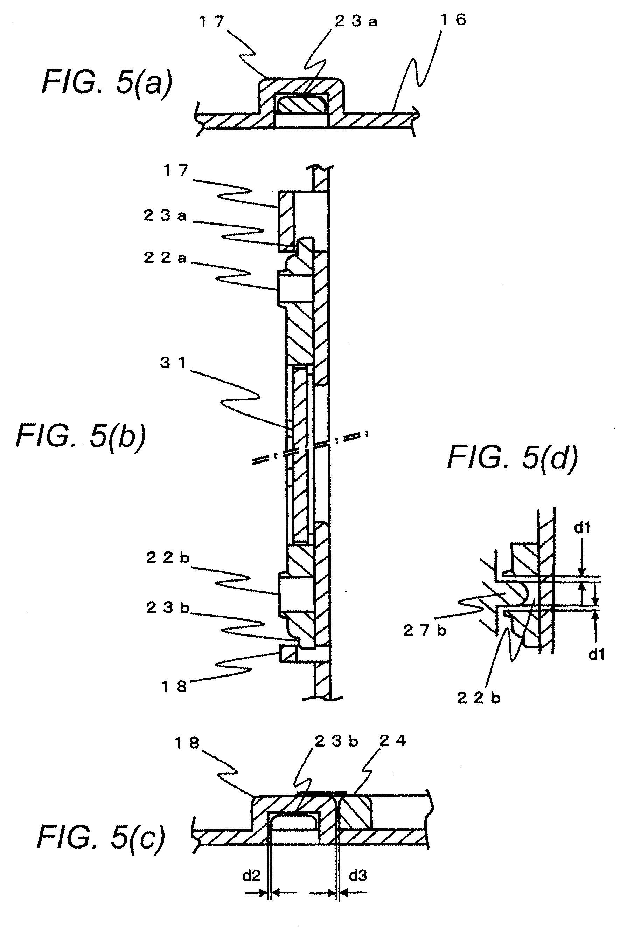

Then, a method for temporarily fixing the sub-display holder which holds the sub-display to the first case will be described, referring to Fig. 5.

Fig. 5(a) is a sectional view as seem from a direction of arrow marks A-A in Fig. 2, Fig. 5(b) is a sectional view as seen from a direction of arrow marks B-B in Fig. 2, Fig. 5(c) is a sectional view as seen from a direction of arrow marks C-C in Fig. 2, and Fig. 5(d) is a sectional view for explaining fitting between the second positioning pin 27b and the second pin hole 22b.

At first, for the purpose of temporarily fixing the sub-display holder 21 which holds the sub-display 31 to the first case 16, the first engaging piece 23a at the distal end of the first arm 21a formed in the sub-display holder 21 is inserted into the first engaging part 17 of a gate shape formed in the first case 16 to a position deeper than a side surface of the first engaging part 17, whereby the first engaging piece 23 loosely engage the first engaging part 17 as shown in Fig. 5(a).

Then, the second engaging piece 23b at the distal end of the second arm 21 b which is arranged at the opposite position in the sub-display holder 21 is inserted into the second engaging part 18 in a gate shape which is formed in the first case 16 to a position deeper than a side surface of the second engaging part 18, whereby the second engaging piece 23 loosely engage the second engaging part 18. On this occasion, the leg portion of the second engaging part 18 in a gate shape is sandwiched between the second engaging piece 23b and the rotation preventing rib 24 for achieving the engagement.

The first engaging piece 23a at the distal end of the first arm 21 a is formed slightly longer than the second engaging piece 23b at the distal end of the second arm 21 b, and therefore, the first engaging piece 23a will not be disengaged from the first engaging part 17, even though the sub-display holder 21 moves toward the second engaging part 18 to the utmost limit.

Moreover, the rotation preventing rib 24 is formed slightly longer than the second engaging piece 23b at the distal end of the second arm 21 b, and therefore, the second engaging piece 23b is disengaged from the second engaging part 18, in case where the sub-display holder 21 moves toward the first engaging part 17 to the utmost limit.

On this occasion, a gap d3 between the rotation preventing rib 24 and the leg portion of the second engaging part 18 is made smaller than a gap d2 between the other leg portion of the second engaging part 18 and the second engaging piece 23b as shown in Fig. 5(c). Accordingly, in case where the second engaging piece 23b is disengaged from the second engaging part 18 to cause rotation, the rotation preventing rib 24 is first butted against the leg portion of the second engaging part 18, and thus, the rotation is prevented.

The first arm 21 a diagonally extends from a part of the sub-display holder 21 having a frame shape, as shown in Figs. 2, 4 and 6. Moreover, the first engaging piece 23a is provided at a position curved in a counterclockwise direction (leftward in Fig. 4) around a center part (a center of gravity) of the frame shape of the sub-display holder 21, with respect to an extending direction of the first arm 21a.

On the other hand, when the sub-display 31 is fixed to the sub-display holder 21, the center of gravity of the sub-display 31 is considered to be near the center part of the frame shape of the sub-display holder 21. Moreover, it is considered that an assembly in which the sub-display 31 is fixed to the sub-display holder 21 may rotate around this center of gravity, during the assembling work.

For this reason, unless the rotation preventing rib 24 is provided, the first engaging piece 23a of the first arm 21 a is likely to be disengaged from the first engaging part 17, when the sub-display holder 21 rotates in a clockwise direction as seen in Fig. 4.

In view of the above, in this embodiment, the rotation preventing rib 24, which is a projection, is provided adjacent to the second engaging piece 23b of the second arm 21 b in a counterclockwise direction (rightward in Fig. 4) around the center part (the center of gravity) of the frame shape of the sub-display holder 21, with respect to the second engaging piece 23b.

By providing the rotation preventing rib 24 in this manner, it is possible to prevent the sub-display holder 21 from rotating in a clockwise direction, and therefore, the sub-display holder 21 is unlikely to be disengaged from the first engaging part 17 (unlikely to be detached). As the results, the sub-display holder 21 is also unlikely to be disengaged from the second engaging part 18 (unlikely to be detached).

It is to be noted that the case is the same, in case of an opposite direction to the above. Specifically, in case where the first engaging piece is provided at a position curved in a clockwise direction (rightward in Fig. 4) around the center part (the center of gravity) of the frame shape of the sub-display holder, with respect to the extending direction of the first arm, it is recommended that the rotation preventing rib is provided adjacent to the second engaging piece of the second arm in a clockwise direction (leftward in Fig. 4) with respect to the second engaging piece around the center part (the center of gravity) of the frame shape of the sub-display holder with respect to the second engaging piece.

In this case too, it is possible to prevent the sub-display holder from rotating in a counterclockwise direction, and therefore, the sub-display holder is unlikely to be disengaged from the first engaging part and the second engaging part (unlikely to be detached). In short, it is recommended that the rotation preventing rib is provided adjacent to the second engaging piece of the second arm, in the same direction as the direction where the first engaging piece is curved with respect to the extending direction of the first arm.

According to the above described structure, it is possible to prevent the sub-display holder 21 from moving from the predetermined position in the first case 16 by more than an allowable amount, even though a shock or vibration is applied to the portable terminal device, during production process. Specifically, because the rotation preventing rib 24 is provided, it is possible to prevent the sub-display holder 21 from dropping from the first engaging part 17 and the second engaging part 18 due to the rotation of the sub-display holder 21 during the assembling work, and hence, the assembling workability can be enhanced.

When the first case 16 and the second case 29 are assembled together, the first positioning pin 27a formed in the second case 29 is fitted with the first pin hole 22a in the sub-display holder 21. Moreover, the second positioning pin 27b formed in the second case 29 is fitted with the second pin hole 22b in the sub-display holder 21.

On this occasion, as shown in Fig. 5(d), a gap d1 between the second positioning pin 27b formed in the second case 29 and the first pin hole 22a formed in the sub-display holder 21 is smaller than a gap at a time of temporary fixing. Therefore, the position of the sub-display holder 21 is determined by positional relation between the second positioning pin 27b and the second pin hole 22b.

Specifically, because the first pin hole and the second pin hole which are formed in the sub-display holder are present at the predetermined positions, the sub-display holder can be sandwiched and fixed between the first case 16 and the second case 29.

Moreover, the sub-display holder 21 can be fixed, by inserting the positioning pins 27a, 27b which are formed in the second case 29 into the pin holes 22a, 22b of the sub-display holder 21, in a state where the sub-display holder 21 is temporarily fixed to the first case 16. As the results, it is also possible to enhance workability of positioning the sub-display 31 with respect to the sub-display window 30 which is formed in the second case 29.

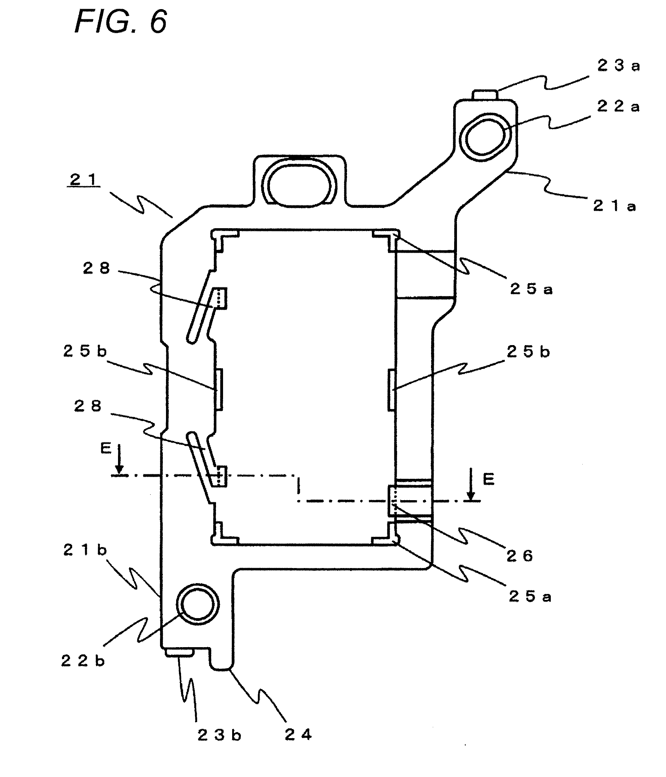

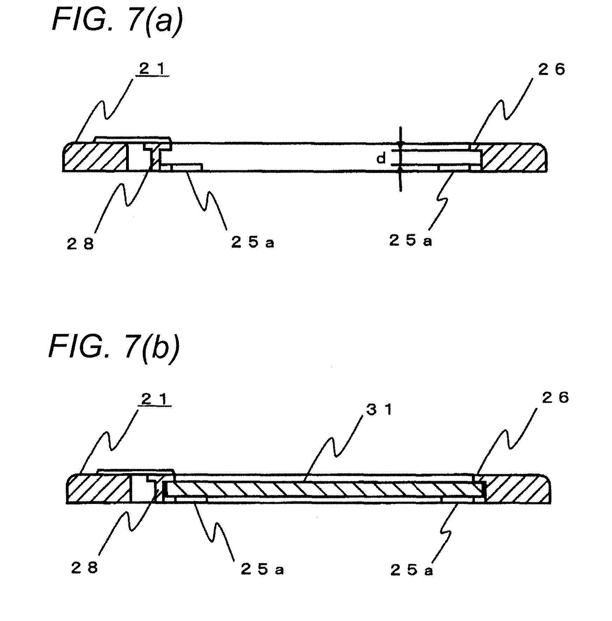

Now, a method for holding the sub-display in the sub-display holder will be described referring to Figs. 6 and 7.

Fig. 6 is a front view of the sub-display holder, Fig. 7(a) is a sectional view as seen from a direction of arrow marks E-E in Fig. 6, and Fig. 7(b) is a sectional view as seen from a direction of arrow marks D-D in Fig. 4.

The sub-display holder 21 in a frame shape is provided with supporting projections 25a, 25b for supporting the sub-display 31 from below, in respective corner parts and center parts of longer sides thereof. It is to be noted that the supporting projections 25b in the center parts of the longer sides may be omitted, depending on mechanical strength of the sub-display body.

In addition, an engaging projection 26 for restraining the sub-display 31 from floating is formed on one edge of the longer side. It is also possible to provide a plurality of the engaging projections 26.

A distance between the supporting projections 25a, 25b and the engaging projection 26 (d in Fig. 7(a)) is slightly larger than a thickness of the sub-display body 31 a.

Further, a pair of pressing parts 28 for urging the sub-display 31, which is contained in the sub-display holder 21, toward the engaging projection 26 are provided on the other longer side of the sub-display holder 21.

The pressing parts 28 are formed in a hook shape for the purpose of urging an end surface of the sub-display 31 toward the engaging projection 26, and also for the purpose of restraining the sub-display 31 from floating.

According to the structure as described above, in case where the sub-display 31 formed as a unit is held in the sub-display holder 21, the longer side of the sub-display 31 is inserted deeply into the gap d between the supporting projection 25a and the engaging projection 26. Then, a pair of the pressing parts 28 are spread outward, and the sub-display 31 is pushed up to reach the supporting projection 25a which supports the sub-display 31 from the below. When the pressing parts 28 are released in this state, the pressing parts 28 come into contact with the end surface of the sub-display 31 and a part of an upper surface thereof, as shown in Fig. 7(b). Consequently, the sub-display 31 can be held in a pressurized state.

As described herein above, in the mobile phone of a foldable type in the embodiment according to the invention, the sub-display holder can be temporarily fixed to the first case. Then, in the temporarily fixed state, the sub-display holder can be sandwiched and fixed between the first case and the second case, by inserting the positioning pins which are formed in the second case into the pin holes of the sub-display holder.

Moreover, because the sub-display holder can be fixed, by inserting the positioning pins which are formed in the second case into the pin holes of the sub-display holder, in a state where the sub-display holder is temporarily fixed to the first case, it is also possible to enhance the workability of positioning the sub-display with respect to the sub-display window which is formed in the second case.

Further, because the rotation preventing rib is provided, it is possible to prevent the sub-display holder from dropping from the first engaging part and the second engaging part due to the rotation of the sub-display holder during the assembling work, and the assembling workability can be enhanced.

Although the sub-display of the mobile phone has been described as the display, in the above described embodiment, the invention is not limited to the case, but may be applied to any display holder for holding a display.

Although the mobile phone of a foldable type has been described as the portable terminal device, the invention is not limited to the case, but may be also applied to a mobile phone of an integral type or a sliding type. Moreover, the invention is not limited to the mobile phone, but may be applied to other electronic devices such as a digital camera, a PDA.

Although the invention has been described in detail, referring to the specified embodiment, it is apparent to those skilled in the art that various modifications or amendments can be added to the embodiment, without deviating from the sprit and scope of the invention.
This invention is based on Japanese Patent Application No. 2009-128467 filed on May 28, 2009, the contents of which are hereby incorporated by reference.

### Industrial Applicability

As described herein above, the portable terminal device according to the invention has such an advantage that it is excellent in the assembling workability, because the display holder which holds the display can be reliably and temporarily fixed to the predetermined position, and the display holder in the temporarily fixed state can be fixed by means of the positioning pins of the second case. Therefore, the portable terminal device is useful as a mobile phone, a PDA, a notebook computer, a portable game player, etc.

### Description of Reference Signs

- 10: Mobile phone
- 11: First case body
- 12: Operating unit
- 14: Second case body
- 15: Main display
- 16: First case
- 16a: Packing groove
- 17: First engaging part
- 18: Second engaging part
- 20: Hinge part
- 21: Sub-display holder
- 21a: First arm
- 21b: Second arm
- 22a: First pin hole
- 22b: Second pin hole
- 23a: First engaging piece
- 23b: Second engaging piece
- 24: Rotation preventing rib (projection)
- 25a, 25b: Supporting projection
- 26: Engaging projection
- 27a: First positioning pin
- 27b: Second positioning pin
- 28: Pressing part
- 29: Second case
- 30: Sub-display window
- 31: Sub-display
- 31a: Sub-display body
- 31b: Drive IC
- 31c: Flexible circuit board

## Claims

1. A portable terminal device comprising:
a display;
a display holder configured to fix the display and comprising:
a first arm comprising a first engaging piece and a first pin hole; and
a second arm comprising a second engaging piece, a second pin hole and a projection, and arranged at a position opposing the first arm;
a first case comprising:
a first engaging part configured to engage the first engaging piece thereby temporarily fixing the display holder; and
a second engaging part configured to engage the second engaging piece thereby temporarily fixing the display holder; and
a second case comprising positioning pins,
wherein the positioning pins formed in the second case are inserted into the first pin hole and the second pin hole of the display holder in a state where the display holder is temporarily fixed to the first case, whereby the display holder is fixed.

2. The portable terminal device according to claim 1,
wherein the first engaging piece is provided in a direction curved in a clockwise direction or in a counterclockwise direction around a center of a frame shape of the display holder, with respect to an extending direction of the first arm, and
wherein a rotation preventing rib is provided adjacent to the second engaging piece of the second arm in the same direction as the direction of the first engaging piece which is curved around the center of the frame shape of the display holder, with respect to the extending direction of the first arm.

3. The portable terminal device according to claim 1 or 2,
wherein the display holder has a frame shape, and
wherein said portable terminal device comprises:
an engaging projection arranged inside the frame shape and configured to sandwich and hold one side of the display; and
a pressing part arranged inside the frame shape so as to oppose the engaging projection and configured to press an opposite side of the display.

4. The portable terminal device according to any one of claims 1 to 3,
wherein the display comprises:
a display body;
a drive IC arranged in a substantially center part of an end part of one surface of the display body; and
a flexible circuit board drawn from a corner part of the display body.
